# EUROPÄISCHE PATENTSCHRIFT

(11) **EP 3 800 008 B1**
(45) Veröffentlichungstag und Bekanntmachung des Hinweises auf die Patenterteilung: **04.12.2024**
(21) Anmeldenummer: 19201010.6
(22) Anmeldetag: 02.10.2019
(51) Int. Cl.: B24B 27/00, B24B 37/04, B24B 41/00, B24B 41/02, B25J 11/00

(54) **VORRICHTUNG UND VERFAHREN ZUM SCHLEIFEN UND/ODER POLIEREN PLANER FLÄCHEN VON WERKSTÜCKEN**
DEVICE AND METHOD FOR GRINDING AND / OR POLISHING PLANAR SURFACES OF WORKPIECES
DISPOSITIF ET PROCÉDÉ DE MEULAGE ET / OU DE POLISSAGE DES SURFACES PLANES DES PIÈCES

(43) Veröffentlichungstag der Anmeldung: 07.04.2021
(73) Patentinhaber: Optikron GmbH, 07749 Jena (DE)
(72) Erfinder: SEYFFERT, Gerrit, 07749 Jena (DE)
(74) Vertreter: Maikowski & Ninnemann Patentanwälte Partnerschaft mbB

(56) Entgegenhaltungen:
- EP-A1- 3 372 341
- DE-A1- 19 853 060
- DE-A1- 2 526 633
- JP-A- 2017 144 531
- JP-A- H1 199 471

## Beschreibung

### Gebiet der Erfindung

Die Erfindung betrifft eine Vorrichtung für das Schleifen und/oder Polieren von planen Flächen nach dem Oberbegriff des Anspruchs 1. Die Erfindung betrifft weiterhin ein Verfahren für das Schleifen und/oder Polieren von planen Flächen unter Verwendung der erfindungsgemäßen Vorrichtung.

### Hintergrund der Erfindung

Zu den Grundstrukturen der klassischen Optik gehören bekannte Strukturen wie Linsen, Prismen, Polarisatoren, Filter, Phasenplatten, Spiegel, Blenden, Gitter. Schwerpunkte von Entwicklung und Fertigung sind vor allem Prismen, Prismen- und Spiegelgruppen, Linsen und Linsenarrays (sphärisch und asphärisch, zylindrisch, eindimensionale Zeilen und zweidimensionale Arrays) mit refraktiver oder diffraktiver Wirkung sowie Gitterstrukturen. Das Spektrum der Werkstoffe für die Herstellung von optischen Strukturen ist extrem breit und wird derzeit auch noch erweitert. Die für die Anwendung wichtigsten Werkstoffe sind Gläser einschließlich Quarzglas, Polymere und Silicium, daneben einige Kristalle wie LiNbO₃ sowie GaAs und GaP (letzteres ist als hochbrechendes Material für Wellenlängen über 500 nm geeignet). Bei Polymeren sind die niedrigen Kosten für eine Massenfertigung entscheidende Triebkraft. Silicium ist ein Material der Wahl für Spiegel sowie für den infraroten Spektralbereich, da die dort vorliegende hohe Brechzahl optische Vorteile bringt.

Die Realisierung der optischen Funktion erfolgt durch die Formgebung des homogenen optischen Mediums oder durch die Brechzahländerung eines in seiner Form unveränderten optischen Substrates (Gradienten-Index-Bauelemente, GRIN) oder durch eine Kombination beider Methoden.

Optische Einzelbauelemente und Linsen aus Glas (insbesondere Prismen) mit mindestens einer planen Fläche werden konventionell mit den klassischen Herstellungsmethoden (Schleifen, Polieren) oder mittels komplexer CNC-Maschinen hergestellt. Dabei erfolgt das Schleifen des rohen Materials mit, um beispielsweise die Form eines Prismas oder einen ersten Radius beider Linsenoberflächen herzustellen. Das Schleifen umfasst einen Schritt des Grobschleifens und des Feinschleifens. Anschließend erfolgt das Polieren der Optiken, wiederum mit sehr komplexen CNC-Maschinen oder klassischen Hebelpoliermaschinen. Auch das Schleifen und Polieren von Hand ist für spezielle Optiken noch eine gängige Methode. Der Poliervorgang dauert wenige Minuten bis mehrere Stunden, je nach Größe, Form und Material der Optiken. In der industriellen Optikfertigung kommen vereinzelt bei der Politur von sphärischen und asphärischen Linsen, schon seit einiger Zeit Roboter erfolgreich zum Einsatz. Diese Optikarten sind jedoch sehr verschieden in ihren Fertigungsprozessen. Die für die Linsenbearbeitung existierenden Roboterverfahren sind bis heute nicht für plane Flächen anwendbar, da sie keine ausreichende Güte für die erforderliche Oberflächenebenheit erreichen. Die Polierbewegungen und -richtungen klassischer Hebelmaschinen sind nicht frei gestaltbar, weil der prinzipielle Bewegungsablauf durch das Prinzip der Hebelmaschine fest vorgegeben wird. Es können keine Zyklen mit ganz verschiedenen Bewegungsformen umgesetzt werden, was bei einigen Optikarten für das Erreichen der erforderlichen Oberflächengüte notwendig wäre. Polierwerkzeuge für Linsen, wie beispielsweise bekannt aus der DE 60202804 T2, weisen eine torische Polierfläche auf und sind deshalb nur für das Polieren konkaver oder konvexer Flächen geeignet, nicht aber für das Polieren planer Flächen.

Konventionelle automatisierte Systeme für das Polieren von planen Flächen, die eine hohe Präzision erfordern, wie beispielsweise plane Flächen optischer Bauteile sind somit entweder sehr komplex und teuer oder erreichen nicht die gewünschten Qualitätsanforderungen. Auf angrenzenden technischen Gebieten sind zwar Vorrichtungen zum Polieren von planen Flächen bekannt, dieses sind aber nicht für das Polieren von planen Flächen, die eine hohe Präzision erfordern, wie beispielsweise plane Flächen optischer Bauteile, geeignet.

DE 60221502 T2 beispielsweise betrifft eine Poliervorrichtung zum Wiederherstellen von optischen Scheiben oder Disks, z.B. CD, DVD, VD und LD, umfassend eine Scheibenrotationsvorrichtung zum Rotieren einer optischen Scheibe, und einen Poliermechanismus zum Polieren der Oberfläche der optischen Scheibe, wobei der Poliermechanismus einen elastischen Mechanismus zum elastischen Halten eines Polierpads und das Polierpad ein Polierblatt aufweist. Der elastische Mechanismus ist konstruktiv so ausgelegt, dass das Polierblatt mit der Oberfläche der optischen Scheibe mit einem zum Polieren erforderlichen Druck in Kontakt kommt. Die konstruktive Auslegung des elastischen Mechanismus lässt sich jedoch nicht auf das Polieren von Planoptiken übertragen.

Die DE 102014002844 A1 betrifft ein chemisch-mechanisches Polierkissen, umfassend eine Polierschicht mit einer Polieroberfläche und einen Breitspektrum-Endpunkterfassungsfensterblock, der eine Dicke entlang einer Achse senkrecht zu einer Ebene der Polieroberfläche aufweist, wobei der Breitspektrum-Endpunkterfassungsfensterblock ein cyclisches Olefin-Additionspolymer umfasst, wobei der Breitspektrum-Endpunkterfassungsfensterblock eine einheitliche chemische Zusammensetzung über dessen Dicke aufweist, wobei der Breitspektrum-Endpunkterfassungsfensterblock einen Spektrumverlust von ≤ 40% aufweist, und wobei die Polieroberfläche zum Polieren eines Substrats angepasst ist, das aus einem magnetischen Substrat, einem optischen Substrat und einem Halbleitersubstrat ausgewählt ist. Hierbei handelt es sich um ein Werkzeug, das zusammen mit einer konventionellen Poliermaschine und den damit verbundenen, oben beschriebenen Nachteilen, verwendet werden muss.

JP 2017 144531 A beschreibt eine Vorrichtung nach dem Oberbegriff des Anspruchs 1 und betrifft ein Polierwerkzeug, bei dem auf einer Polierplatte drei Trägerelemente angeordnet sind. Jedes Trägerelement wird durch einen Arm mit Führungsrollen auf der Polierplatte positioniert, wobei die Arme beweglich sind und durch einen Antriebsmechanismus angetrieben werden.

### Beschreibung der Erfindung

Die Aufgabe der Erfindung bestand deshalb darin, eine Vorrichtung bereitzustellen, die speziell zum Schleifen und/oder Polieren von planen Flächen, die eine hohe Präzision erfordern, wie beispielsweise plane Flächen optischer Bauteile, geeignet ist und mit der die Nachteile konventioneller Schleif- und/oder Poliermaschinen für optische Strukturen überwunden werden können.

Die Aufgabe der Erfindung wird gelöst durch eine Vorrichtung für das Schleifen und/oder Polieren von Planoptiken nach Anspruch 1.

Der Rahmen weist eine Öffnung auf, die den Werkstückhalter mit mindestens einem Werkstück enthält. Die erfindungsgemäße Vorrichtung ist so eingerichtet, dass zwischen dem Werkstückhalter und dem Rahmen ein Loslager gebildet wird. Das Polierwerkzeug und/oder das Schleifwerkzeug ist, im Gegensatz zu konventionellen Poliermaschinen oder Schleifmaschinen für optische Strukturen, feststehend angeordnet; und ebenfalls im Gegensatz zu konventionellen Polier- oder Schleifmaschinen für optische Strukturen, ist das zu bearbeitende Werkstück nicht feststehend, sondern wird über das Polierwerkzeug bewegt. Der Werkstückhalter mit mindestens einem Werkstück wird vorzugsweise in einer Ebene, die durch die aufliegenden Flächen des mindestens einen Werkstücks auf dem Schleif- und/oder Polierwerkzeug vorbestimmt wird, geführt. Besonders bevorzugt erfolgt eine horizontale Bewegung des Werkstückhalters mit dem mindestens einen Werkstück.

Das Werkstück muss nicht zwangsweise in einem Werkstückhalter enthalten sein, sondern kann, bei entsprechender Größe, auch direkt in dem Rahmen enthalten sein und mit diesem durch das Mittel zum Bewegen des Rahmens bewegt werden.

Die zu bearbeitenden planen Oberflächen sind vorzugsweise plane Flächen optischer Bauteile, mehr bevorzugt Planoptiken und besonders bevorzugt Präzisions-Planoptiken oder Mikro-Planoptiken und sind beispielsweise ausgewählt aus optischen Prismen, Keilen, Stäben, Platten usw. Die erfindungsgemäße Vorrichtung ist grundsätzlich aber auch für das Polieren bzw. Schleifen jeglicher Art von planen Flächen geeignet, bei denen es auf eine hohe Oberflächengüte ankommt, wie beispielsweise von optischen Scheiben oder Disks, z.B. CD, DVD, VD und LD, oder Wafern aus der Halbleiterindustrie. Die erfindungsgemäße Vorrichtung ist besonders gut geeignet für das Polieren und/oder Schleifen planer Mikrooptiken. Die erfindungsgemäße Vorrichtung ist darüber hinaus für das Schleifen und/oder Polieren jeglicher Art von planen Flächen, auch auf anderen technischen Gebieten außerhalb der Optik und der Halbleiterindustrie einsetzbar. Da die Auswahl des Polier- bzw. Schleifwerkzeugs frei wählbar ist, kann mit der erfindungsgemäßen Vorrichtung auch jede Art von Material geschliffen bzw. poliert werden, das einer mechanischen Oberflächenbearbeitung zugänglich ist.

Als Mittel zum Bewegen des Rahmens, der den Werkstückhalter mit dem mindestens einen Werkstück enthält, ist prinzipiell jedes Mittel geeignet, das dazu in der Lage ist, den Werkstückhalter mit mindestens einem Werkstück in einer Ebene, die durch die aufliegenden Flächen des Werkstücks auf dem Polier- und/oder Schleifwerkzeug vorbestimmt wird, zu führen.

Das Mittel zum Bewegen des Rahmens, der den Werkstückhalter mit dem mindestens einen Werkstück enthält, kann beispielsweise eine klassische Hebelmaschine sein. Jedoch sind die Bewegungsart und -richtung des Rahmens und damit des Werkstückhalters mit dem mindestens einen Werkstück durch die Hebelmaschine fest vorgegeben und daher beschränkt. Das Mittel zum Bewegen des Rahmens, der den Werkstückhalter mit dem mindestens einen Werkstück enthält, ist deshalb vorzugsweise hinsichtlich der Gestaltung der Polier- und/oder Schleifbewegungen frei und ermöglicht das Umsetzen von Bewegungszyklen mit ganz verschiedenen Bewegungsformen in einer Ebene, was mit den klassischen Hebelmaschinen nicht möglich ist. Des Weiteren können die Güte der erreichbaren Oberfläche, die Polierzeit und somit die Effizienz durch die Gestaltung der Bewegungsformen, die in einer Ebene stattfinden, positiv beeinflusst werden.

Mit "Ebene", in der diese Bewegungsformen ausgeführt werden, ist die Ebene gemeint, in der das mindestens eine Werkstück über das Polier- und/oder Schleifwerkzeug geführt wird. In einer besonders bevorzugten Ausführungsform der Erfindung wird das mindestens eine Werkstück horizontal über das Polier- und/oder Schleifwerkzeug geführt, d. h. die zu bearbeitende Oberfläche einer Planoptik wird mit hoher Präzision parallel zur Oberfläche des Polier- und/oder Schleifwerkzeugs geführt. Die Umsetzung dieser gewünschten Bewegungszyklen wird beispielsweise durch eine Vorrichtung mit automatisiert bewegten Achsen (CNC-Maschine) oder einen Roboter erreicht, der einen Roboterarm aufweist, der als Mittel zum Bewegen des Rahmens mit dem darin beweglich angeordneten Werkstück oder Werkstückhalter dient. Das Mittel zum Bewegen des Rahmens, in dem das Werkstück oder der Werkstückhalter mit dem mindestens einen Werkstück beweglich angeordnet ist, ist demnach erfindungsgemäß eine CNC-Maschine oder ein Roboter mit einem Roboterarm oder eine andere Vorrichtung mit automatisiert bewegten Achsen. Besonders bevorzugt ist in diesem Zusammenhang ein Roboter mit einem Roboterarm. Die gewünschten Bewegungszyklen und - abläufe werden durch ein Steuerprogramm, das in der Steuereinheit des Mittels zum Bewegen des Rahmens ausgeführt wird, gesteuert. Steuerprogramme zur Steuerung von CNC-Maschinen, Industrierobotern und anderen geeigneten Einrichtungen zum Bewegen des Rahmens der erfindungsgemäßen Vorrichtung sind dem Fachmann bekannt.

Der Werkstückhalter kann für die Aufnahme eines einzelnen Werkstücks für die Durchführung des Schleif- und/oder Polierverfahrens eingerichtet sein. In Abhängigkeit der Größe der zu bearbeitenden Werkstücke hat es sich als zweckmäßig erwiesen, den Werkstückhalter mit einem Tragkörper zu versehen, der zur Aufnahme mehrerer Werkstücke geeignet ist. Dies ist von Vorteil, da dadurch mehrere, und bei Mikroplanoptiken sogar sehr viele Werkstücke gleichzeitig bearbeitet werden können.

In einer besonders bevorzugten Ausführungsform stellt die Erfindung deshalb eine Vorrichtung für das Polieren von planen Flächen, insbesondere Präzisions-Planoptiken bereit, umfassend
- eine CNC Maschine oder einen Roboter mit einem Roboterarm,
- ein Polier- und/oder Schleifwerkzeug,
- einen Rahmen, der mit der CNC Maschine oder dem Roboterarm eines Roboter verbunden ist, und
- ein Werkstück oder einen Halter für mindestens ein Werkstück,
**dadurch gekennzeichnet dass**
der Rahmen das Werkstück oder den Werkstückhalter mit mindestens einem Werkstück locker enthält und dadurch ein Loslager zwischen dem Rahmen und dem Werkstück oder dem Werkstückhalter mit Werkstück gebildet wird, und die CNC Maschine oder der Roboter mit dem Roboterarm so konfiguriert ist, dass das Werkstück oder der Werkstückhalter mit einem Werkstück oder einem Tragkörper mit mehreren Werkstücken in einer Ebene, die durch die aufliegenden Flächen des Werkstücks oder der Werkstücke auf dem Polier- und/oder Schleifwerkzeug vorbestimmt wird, geführt wird.

In Verbindung mit dem Bewegen des Werkstücks auf dem Polier- und/oder Schleifwerkzeug können durch die erfindungsgemäße Vorrichtung ganz gezielt auch Bewegungsabläufe generiert werden, die auch rein lineare oder sehr schwach gekrümmte Bewegungen abbilden. Insbesondere das Rotieren des Werkstücks (maschinell forciert oder erzwungen) kann somit vermieden werden. Durch die mit der CNC-Maschine oder dem Roboter hervorgerufenen Bewegungen können also mit der erfindungsgemäßen Vorrichtung ganz flexibel Bahnen und Bewegungsabläufe erstellt werden, bei denen die Kräfte jeweils nur in die gewünschten Vorzugsrichtungen wirken. Weiterführend können die Geschwindigkeiten in verschiedenen Bewegungsstadien variiert werden.

Das "Loslager" im Sinne der Erfindung ist kein Bauteil an sich, sondern wird durch den Rahmen, der mit dem Mittel zum Bewegen des Rahmens verbunden ist, und dem Werkstückhalter definiert. Der Rahmen weist eine Öffnung einer beliebigen geometrischen Form auf. In dieser Öffnung ist der Werkstückhalter beweglich angeordnet. Der Werkstückhalter ist also nicht fest mit dem Rahmen verbunden. Der Werkstückhalter wird durch die Bewegungen des Rahmens geführt, d.h. der Rahmen überträgt die Bewegungen des Mittels zum Bewegen des Rahmens (Hebelmaschine, CNC-Maschine, Roboter) auf den Werkstückhalter. Dadurch wird gewährleistet, dass der Werkstückhalter Bewegungen in einer oder in zwei der drei Richtungen im Raum ausführen kann. Vorzugsweise werden durch diesen Aufbau Bewegungen aller Art (lineare, gekrümmte und Drehbewegungen) des Werkstückhalters mit mindestens einem Werkstück oder mit einem Tragkörper mit mehreren Werkstücken in nur einer Ebene zugelassen. Diese Anordnung ist besonders vorteilhaft, da Verdrehungen des Werkstückhalters und damit des mindestens einen Werkstücks aus der horizontalen Ebene heraus (d.h. seitliches Verkanten des Werkstückhalters und der Werkstücke) unterbunden oder nur ganz gezielt, durch eingestellte Bahnen, erzeugt werden. Anstatt des Werkstückhalters besteht auch die Möglichkeit, ein Werkstück direkt in den Rahmen locker einzubringen, das darin zur Bearbeitung geführt wird.

Die bisher beschriebenen Ausführungsformen der erfindungsgemäßen Vorrichtung haben den Vorteil, dass das Polieren oder Schleifen der planen Fläche des Werkstücks mit höchster Präzision erfolgt und auch geringfügigste Vertikalauslenkungen des Roboterarms sowie störende Krafteinwirkungen nicht auf den Werkstückhalter mit Werkstück übertragen werden und somit ungewünschter Druck und die Auslenkung des Werkstücks oder des Werkstückhalters mit Werkstück aus der horizontalen Ebene heraus effektiv unterbunden werden. Damit werden Güten der Oberflächen erreicht, die den Anforderungen für Planoptiken gerecht werden. Weiterführend entsteht eine schonende Bearbeitung, mit der auch Mikrooptiken und andere empfindliche Komponenten bearbeitet werden können.

Das Problem konventioneller Poliermaschinen besteht darin, dass kleinste Auslenkungen des Polierwerkzeugs in allen drei Raumrichtungen nicht vollständig verhindert werden können, da bei konventionellen Poliermaschinen nicht nur das Werkstück bewegt wird, sondern das Polierwerkzeug selbst. Wünschenswert ist nur die horizontale Auslenkung in zwei Raumrichtungen in einer Ebene. Genauso wenig kann vollständig verhindert werden, dass durch das Mittel zum Bewegen, in diesem Falle die Poliermaschine, eine direkte Krafteinwirkung des Polierwerkzeugs, insbesondere vertikaler Druck, in sich verändernden Stärken auf das Werkstück erfolgt. Die Kraft- bzw. Druckeinwirkung kann nicht vollständig kontrolliert werden, insbesondere nicht auf konstante Werte eingestellt werden. Diese Nachteile des Standes der Technik werden ebenfalls mit der erfindungsgemäßen Vorrichtung überwunden. Die vertikale Ausübung von Kraft bzw. Druck auf das Werkstück ist durch eine entsprechende Programmierung bzw. Konfiguration des Roboters verhinderbar.

In einer weiteren Ausführungsform ist die erfindungsgemäße Vorrichtung deshalb dadurch gekennzeichnet, dass der Roboter so konfiguriert ist, dass durch den Roboterarm keine vertikale Ausübung von Kraft bzw. Druck auf das Werkstück erfolgen kann. Als Druck im Sinne der Erfindung wird das Ergebnis einer senkrecht oder schräg von oben auf eine Fläche A einwirkende Kraft F verstanden, wobei mit der Fläche A die zu polierende plane Fläche des Werkstücks gemeint ist.

Die Übertragung unerwünschter Auslenkungen des Roboterarms auf das Werkstück werden erfindungsgemäß dadurch verhindert, dass der Werkstückhalter mit dem Mittel zum Bewegen nicht fest verbunden, sondern beweglich in dem Rahmen enthalten ist und durch diesen geführt wird. Für die präzisere Übertragung der Bewegungen des Rahmens auf den Werkstückhalter hat es sich als zweckmäßig erwiesen, wenn der Rahmen Mittel zur Führung des Werkstückhalters enthält.

In einer weiteren Ausführungsform ist die erfindungsgemäße Vorrichtung deshalb dadurch gekennzeichnet, dass das Werkstück oder der Werkstückträger locker, d.h. beweglich, in dem Rahmen angeordnet ist und der Rahmen seitliche Anlagen zur Führung des Werkstücks aufweist. Die seitlichen Anlagen zur Führung des Werkstückhalters bestehen vorzugsweise aus einem elastischen und oder stoßdämpfenden Material, welches besonders bevorzugt keinen oder nur geringen Abrieb erzeugt. Ein geeignetes Material besteht beispielsweise aus Filz. Geeignet sind auch beliebig andere, auch harte Materialien, die ein vertikal gerichtetes Gleiten des Werkstücks oder des Werkstückhalters im Rahmen ermöglichen und somit den vorzugsweise in horizontale Richtung lockeren Sitz gewährleisten. Zusätzlich ist es von Vorteil, wenn der Rahmen so konfiguriert ist, dass das Werkstück oder der Werkstückhalter mit mindestens einem Werkstück in dem Rahmen gegen Verdrehung gesichert ist.

Alternativ können die seitlichen Anlagen zur Führung des Werkstückhalters auch am Werkstückhalter selbst angebracht sein.

Erfindungsgemäß können ein oder mehrere Werkstücke in dem Werkstückhalter oder einem Tragkörper enthalten sein, beispielsweise 1 bis 10 oder bei kleineren Teilen, wie z.B. Mikrooptiken, bis zu einigen hundert Werkstücken.

Wie bereits beschrieben kann die Öffnung des Rahmens, in der das Werkstück oder der Werkstückhalter beweglich enthalten ist, jede beliebige geometrische Form aufweisen, die dazu geeignet ist, das Verdrehen des Werkstückhalters aus der horizontalen Ebene heraus, d.h. das Verkanten des Werkstückhalters zu unterbinden. In einer besonders bevorzugten Ausführungsform der Erfindung weist der Rahmen deshalb eine rechteckige, trapezförmige, vieleckige, elliptische oder jede andere Form auf. Dadurch wird das Umsetzen von Bewegungszyklen mit ganz verschiedenen Bewegungsformen des Werkstückhalter mit mindestens einem Werkstück in einer Ebene, und die geschickte Gestaltung der Bewegungsformen (lineare, gekrümmte und Drehbewegungen), die in einer Ebene stattfinden sollen, möglich, ohne dass Fehlbewegungen des Rahmens in einer unerwünschten Ebene (wie zum Beispiel Verdrehungen aus der horizontalen Ebene heraus), die durch Fehlbewegungen des Mittels zum Bewegen des Rahmens erzeugt werden, auf den Werkstückhalter und damit auf das mindestens eine Werkstück übertragen werden.

Um die vorgegebene Oberflächengüte einer zu schleifenden oder polierenden Fläche, insbesondere einer Planoptik zu erreichen, kann es notwendig sein, die Bewegung des Werkstückhalters mit dem Werkstück genau zu kontrollieren. In einer weiteren Ausführungsform der Erfindung ist die erfindungsgemäße Vorrichtung deshalb dazu konfiguriert, über den Rahmen die Bewegung des Werkstückhalters mit dem Werkstück in genau vordefinierten Bahnen auszuführen.

Wie oben erwähnt, führt die Einwirkung von Druck in wechselnden Stärken auf das Werkstück zu unerwünschten Qualitätsverlusten der Güte der planen Oberfläche des Werkstücks. Dieses Problem kann dadurch gelöst werden, dass der Druck, der auf das Werkstück und/oder den Werkstückhalter einwirkt, kontrolliert wird, vorzugsweise konstant gehalten wird. Dies wird mit der erfindungsgemäßen Vorrichtung auf sehr einfache Weise dadurch erreicht, dass das Gewicht des Werkstücks oder des Werkstücks mit Wertstückhalter und ggf. Tragkörper für mehrere Werkstücke zur Erzeugung des erforderlichen Drucks verwendet wird, oder dass auf den Werkstückhalter mit dem Werkstück zusätzlich ein Gewicht aufgebracht wird, das eine gewünschte Masse aufweist und das zusammen mit dem Werkstückhalter und dem Werkstück bewegt wird. In einer weiteren Ausführungsform der Erfindung ist die Vorrichtung deshalb dazu konfiguriert, dass der zur Ausführung des Poliervorgangs benötigte Druck durch das Werkstückgewicht selbst, direkt durch den Werkstückhalter, und optional, ein auf dem Werkstück und/oder Werkstückhalter aufgebrachtes Gewicht ausgeübt wird.

Nachteilig auf die Güte der Oberfläche der Planoptik kann sich außerdem auswirken, wenn das Werkstück durch die Ausführung der Bewegungen beim Schleifen oder Polieren zu rotieren beginnt. In einer weiteren Ausführungsform der Erfindung ist die Vorrichtung deshalb dazu konfiguriert, eine erzwungene Rotation des Werkstücks zu vermeiden. Dies wird beispielsweise durch die oben genannte geometrische Form der Öffnung des Rahmens (rechteckig, trapezförmig, vieleckig oder elliptisch) und eine entsprechende geometrische Form des Teils des Werkstückhalters, der beweglich in dem Rahmen angeordnet ist, erreicht.

"Locker bzw. beweglich enthalten" im Sinne der Erfindung bedeutet, dass der Werkstückhalter einerseits mit dem Rahmen nicht fest verbunden ist und die geometrische Form der Öffnung des Rahmens mit der geometrischen Form des Teils des Werkstückhalters, der in der Öffnung des Rahmen angeordnet ist, im Wesentlichen übereinstimmt. Vorzugsweise ist der Abstand zwischen der Öffnung des Rahmens und den Außenkanten des Teils des Werkstückhalters, der in der Öffnung des Rahmens angeordnet ist, minimal und gerade groß genug, dass ein Festklemmen des Werkstückhalters in dem Rahmen vermieden wird. Der Abstand (umlaufend) zwischen der Öffnung des Rahmens bzw. den dort angebrachten Führungen für den Werkstückhalter und den Außenkanten des Teils des Werkstückhalters, der in der Öffnung des Rahmens enthalten ist, kann beispielweise zwischen 0,01 und 10 mm, vorzugsweise zwischen 0,1 und 5 mm, besonders bevorzugt zwischen 0,1 und 2 mm oder zwischen 0,1 und 1 mm betragen.

Wie bereits beschrieben, umfasst die erfindungsgemäße Vorrichtung ein Schleifwerkzeug und/oder ein Polierwerkzeug.

Prinzipiell ist jede Art von Schleifwerkzeug, dass zum Schleifen von planen Flächen von optischen Strukturen geeignet ist, in der erfindungsgemäßen Vorrichtung verwendbar. Vorzugsweise ist das Schleifwerkzeug eine Schleifscheibe. Geeignete Schleifwerkzeuge, insbesondere Schleifscheiben sind dem Fachmann aus dem Stand der Technik bekannt. Prinzipiell ist jede Art von Polierwerkzeug, dass zum Polieren von planen Flächen von optischen Strukturen geeignet ist, in der erfindungsgemäßen Vorrichtung verwendbar. Vorzugsweise ist das Polierwerkzeug eine Polierscheibe. Geeignete Polierwerkzeuge, insbesondere Polierscheiben sind dem Fachmann aus dem Stand der Technik bekannt.

Das Polier- und das Schleifwerkzeug können auch identisch sein. Die gewünschte Oberflächengüte des Werkstücks kann dann beispielsweise durch Auswahl geeigneter Schleif- und Poliermittel erreicht werden, die dem Fachmann bekannt sind.

Die Erfindung betrifft weiterhin ein Verfahren nach Anspruch 9.

Für das erfindungsgemäße Verfahren gelten die bevorzugten Ausgestaltungen und Vorteile der erfindungsgemäßen Vorrichtung gleichermaßen, sodass auf das oben gesagte verwiesen wird. Das erfindungsgemäße Verfahren ist insbesondere dadurch gekennzeichnet, dass der zur Ausführung des Schleif- und/oder Poliervorgangs benötigte Druck durch das Werkstückgewicht selbst, direkt durch den Werkstückhalter, und optional, ein auf dem Werkstück und/oder Werkstückhalter ggf. mit Tragkörper für mehrere Werkstücke aufgebrachtes Gewicht ausgeübt wird, wobei dieses aufgebrachte Gewicht nicht mit dem Rahmen in Berührung kommt. Diese Ausgestaltung unterstützt zusätzlich die Beweglichkeit des Werkstückhalters in dem Rahmen und die Vermeidung der Übertragung unerwünschter Bewegungen des Rahmens auf den Werkstückhalter.

In einer weiteren Ausführungsform der Erfindung ist das Verfahren dadurch gekennzeichnet, dass über den Rahmen der erfindungsgemäßen Vorrichtung die Bewegung des Werkstücks oder des Werkstückhalters mit dem Werkstück in genau vordefinierten Bahnen ausgeführt wird. Ein weiterer Vorteil der Erfindung liegt darin, dass sowohl die erfindungsgemäße Vorrichtung als auch das erfindungsgemäße Verfahren für das Schleifen und/oder Polieren der verschiedensten Werkstoffe, aus denen optische Strukturen üblicherweise bestehen, wie Gläser einschließlich Quarzglas, Polymere und Silicium, daneben einige Kristalle wie LiNbO₃ sowie GaAs und GaP, geeignet sind. Das erfindungsgemäße Verfahren ist grundsätzlich für das Schleifen und/oder Polieren jeglicher Art von Werkstoffen geeignet, die einer mechanischen Oberflächenbearbeitung zugänglich sind.

Üblicherweise werden für den Schleif- und/oder Poliervorgang optischer Strukturen mechanische und/oder chemische Poliermittel eingesetzt. Derartige Poliermittel sind dem Fachmann bekannt und sind nicht Gegenstand der vorliegenden Erfindung. Grundsätzlich sind alle Schleifmittel und Poliermittel, die für das Schleifen oder Polieren optischer Strukturen geeignet sind, mit der erfindungsgemäßen Vorrichtung und in dem erfindungsgemäßen Verfahren verwendbar.

Mit der erfindungsgemäßen Vorrichtung und dem erfindungsgemäßen Verfahren werden bevorzugt Mikro-Planoptiken und Planoptiken sowie Planflächen an andersartigen Optiken und Teilen (z.B. auch an Linsen oder technischen Metall- oder Keramikteilen) bereitgestellt, deren Oberflächengüte eine neue, bisher nicht gekannte Qualität erreichen. Die Erfindung betrifft deshalb in einer weiteren Ausführungsform Planoptiken, Linsen mit einer Planfläche, Wafer, beliebig andersartige Glas-, Metall-, Kunststoff- oder Keramikteile mit mindestens einer planen Fläche, die mit der erfindungsgemäßen Vorrichtung bzw. mit dem erfindungsgemäßen Verfahren hergestellt worden sind.

Die Erfindung stellt eine vorteilhafte Vorrichtung und ein vorteilhaftes Verfahren für das Schleifen und/oder Polieren von planen Flächen, die eine hohe Präzision erfordern, bereit, die auf einer einzigartigen Konstruktion für die Werkstückanbindung über einen Rahmen und einen speziellen Werkstückhalter sowie speziellen Bewegungsabläufen basiert. Mit dem erfindungsgemäßen Verfahren und der erfindungsgemäßen Vorrichtung können sehr empfindliche Planoptiken und solche mit hoher Güte und mit sehr hoher Effizienz geschliffen und poliert werden. Das erfindungsgemäße Verfahren in Verbindung mit dem entwickelten Rahmen und der Anbindung des Werkstückhalters durch Bildung eines Loslagers eignet sich für die industrielle Fertigung von Präzisions-Planoptiken, die in einem breiten Spektrum in verschiedensten Anwendungen zum Einsatz kommen. Nach aktuellem Stand der Technik werden diese Optiken im industriellen Bereich entweder mit klassischen Maschinen (Hebelpoliermaschinen) oder mit sehr komplexen CNC-Maschinen geschliffen oder poliert, wobei der Nachteil darin besteht, dass unerwünschte Bewegungen der klassischen Maschinen direkt auf die Schleif- oder Polierwerkzeuge übertragen werden, wodurch die Qualität der geschliffenen oder polierten Planoptiken höchsten Anforderungen nicht genügen kann. Sehr empfindliche Planoptiken werden deshalb oft mindestens teilweise noch händisch poliert. Das neu entwickelte Verfahren kann vorzugsweise mit einem kollaborierenden Roboter aus dem Preisbereich von aktuell ca. 30.000 Euro durchgeführt werden. Der Investitionsaufwand ist somit deutlich geringer als bei der aktuell gängigen CNC-Technik, wo eine Maschineninvestition häufig >150.000 Euro erreicht. Hinzu kommt, dass die Programmierung des Bewegungsablaufs am Roboter durch die komfortablere Steuerung einfacher und bereits nach vergleichsweise übersichtlicher Einweisung und Schulung möglich ist. Eine ausgebildete CNC-Fachkraft für die Bedienung des erfindungsgemäßen Roboters ist nicht erforderlich, was beim heutigen Fachkräftemangel in diesen Berufsgruppen sehr vorteilhaft ist. Im Vergleich zum Schleifen und/oder Polieren mit klassischen Hebelmaschinen liegt ein ganz wesentlicher Unterschied in der Bewegungsart und damit in der mechanischen Beanspruchung der Werkstücke. Mit der neuartigen Nutzung des Roboters ist man hinsichtlich der Gestaltung der Schleif- und/oder Polierbewegungen absolut frei und es können Zyklen mit ganz verschiedenen Bewegungsformen umgesetzt werden, was mit den klassischen Hebelmaschinen nicht möglich ist. Auf diesen hat man nur sehr wenige Möglichkeiten, weil der prinzipielle Bewegungsablauf durch das Prinzip der Hebelmaschine fest vorgegeben wird. Überraschenderweise hat sich aber gezeigt, dass gerade durch eine geschickte Gestaltung der Bewegungsformen, mit denen das Werkstück über das Schleif- und/oder Polierwerkzeug geführt wird, die Güte der erreichbaren Oberfläche, die Bearbeitungszeit und somit die Effizienz sehr stark beeinflusst werden können. Diesbezüglich bringt der entwickelte Roboterprozess ein zusätzliches Spektrum an Möglichkeiten zur Güte- und Effizienzsteigerung. Weiterhin ist der Schleif- und/oder Polierprozess auf Hebelmaschinen für bestimmte Arten und Abmessungen von Planoptiken nicht geeignet, weil die mechanischen Kräfte, die auf die Werkstücke wirken, durch die an diesen Maschinen vorgegebenen Bewegungen zu hoch sind, was zu Beschädigungen führt. Der erfindungsgemäß bevorzugte Roboterpolierprozess eröffnet gerade für diese sensibleren Teile die Möglichkeit, diese auch maschinell und sogar automatisiert zu schleifen und/oder zu polieren. Da die Investitionskosten für eine klassische Hebelmaschine an den Preis des Roboters heranreichen, überwiegen auch hier im Vergleich die genannten Vorteile des neuartigen Roboterprozesses sehr stark.

In der industriellen Optikfertigung kommen vereinzelt in einem anderen Bereich, bei der Politur von sphärischen und asphärischen Linsen, schon seit einiger Zeit Roboter erfolgreich zum Einsatz. Diese Optikarten sind jedoch sehr verschieden in ihren Fertigungsprozessen. Die für die Linsenbearbeitung existierenden Roboterverfahren waren bis heute nicht für Planoptiken anwendbar, da sie keine ausreichende Güte für die erreichbare Oberflächenebenheit erreichen. Mit der erfindungsgemäßen Vorrichtung und dabei speziell durch den Rahmen und die Anbindung des Werkstückhalters an den Roboter über den Rahmen, wurde dieses Problem nun gelöst und es können jetzt mit der erfindungsgemäßen Vorrichtung und der dem erfindungsgemäßen Verfahren auch Planoptiken mit der geforderten Güte und Effizienz automatisiert mit Industrierobotern geschliffen und poliert werden.

Durch das zwischen dem Werkstückhalter oder dem Werkstück selbst und dem am Roboterarm befestigten Rahmen gebildete Loslager entkoppelt man die unerwünschten Einflüsse durch den Roboter bzw. eines anderen Mittels zum Bewegen des Rahmens. Insbesondere gilt dies für den Druck (komplett lose im Wesentlichen in der Höhenachse => nur "lockere" seitliche Führung ohne festen Griff und ohne Druck). Der Roboter führt nur das Werkstück auf dem Schleif- und/oder Polierwerkzeug in einer Ebene, die durch die aufliegenden Flächen des Werkstücks auf dem Schleif- und/oder Polierwerkzeug vorbestimmt wird (Führung durch seitliche Anlagen am Rahmen, locker, d.h. beweglich im Rahmen der Vorrichtung sitzend => jedoch gegen Verdrehung gesichert), ohne selbst Druck auszuüben. Das Werkstück oder die Werkstücke mit Ihrem Träger sitzen locker oder fest im Werkstückhalter, der wiederum durch die geometrische Form der Öffnung des umgreifenden Rahmens (Form der Öffnung des Rahmens z.B. rechteckig, trapezförmig, vieleckig, elliptisch etc.) gegen Verdrehung gesichert ist. Der Rahmen ist am Roboter befestigt und über den Rahmen wird die Führung des Werkstückhalters und der darin enthaltenen Werkstücke in der gewünschten Bahn realisiert. Der benötigte Druck entsteht durch das Werkstückgewicht selbst, direkt durch den Werkstückhalter und/oder ein optional darauf aufgebrachtes Gewicht, welches gleichmäßigen Druck auf das Werkstück ausübt. So erreicht man die benötigten hohen Ebenheiten, die für Planoptiken und andere Planflächen entscheidend sind, ohne, dass der Roboter diese "verdrückt" oder ungleichmäßig drückt, was sonst durch die Fehler in den Achsen, der relativen Ausrichtung und in den Bewegungsverläufen des Roboters entstehen würde. Darüber hinaus können Bewegungsabläufe generiert werden, die ganz genau definierte Bahnen abfahren und bei denen eine "erzwungene Rotation" des Werkstücks vermieden wird. Eine solche "erzwungene Rotation" entsteht bei den klassischen Hebelmaschinen, was dort teilweise, allerdings für andere Anwendungen, auch gewünscht ist. Für Teile mit bestimmten Formen oder höherer Sensibilität, wie Mikro-Planoptiken, bedeutet solch eine "erzwungene Rotation" jedoch oft eine zu hohe mechanische Beanspruchung, die dazu führen kann, dass sich Teile aus dem Verbund lösen und damit die Gesamtanordnung zerstören". Durch die Roboterbewegungen können ganz gezielt Bahnen und Bewegungsabläufe vorgegeben werden, bei denen die Kräfte jeweils nur in die gewünschten Vorzugsrichtungen wirken und bei denen Geschwindigkeiten individuell optimiert werden können

Die Erfindung wird nachfolgend anhand von 6 Figuren näher erläutert. Es zeigen:
- Figur 1:: eine schematische Darstellung der erfindungsgemäßen Vorrichtung;
- Figur 2:: eine Ausführungsform der erfindungsgemäßen Vorrichtung mit Roboter;
- Figur 3:: eine Ausführungsform des Rahmens mit quadratischer Öffnung;
- Figur 4:: eine Ausführungsform des Rahmens mit rechteckiger Öffnung;
- Figur 5:: eine Ausführungsform des Rahmens mit dreieckiger Öffnung;
- Figur 6:: eine Ausführungsform des Rahmens mit 6-eckiger Öffnung;
- Figur 7:: eine Ausführungsform des Rahmens mit elliptischer Öffnung;
- Figur 8: eine schematische Darstellung einer weiteren Ausführungsform der erfindungsgemäßen Vorrichtung; und
- Figur 9: eine weitere schematische Darstellung einer weiteren Ausführungsform der erfindungsgemäßen Vorrichtung.

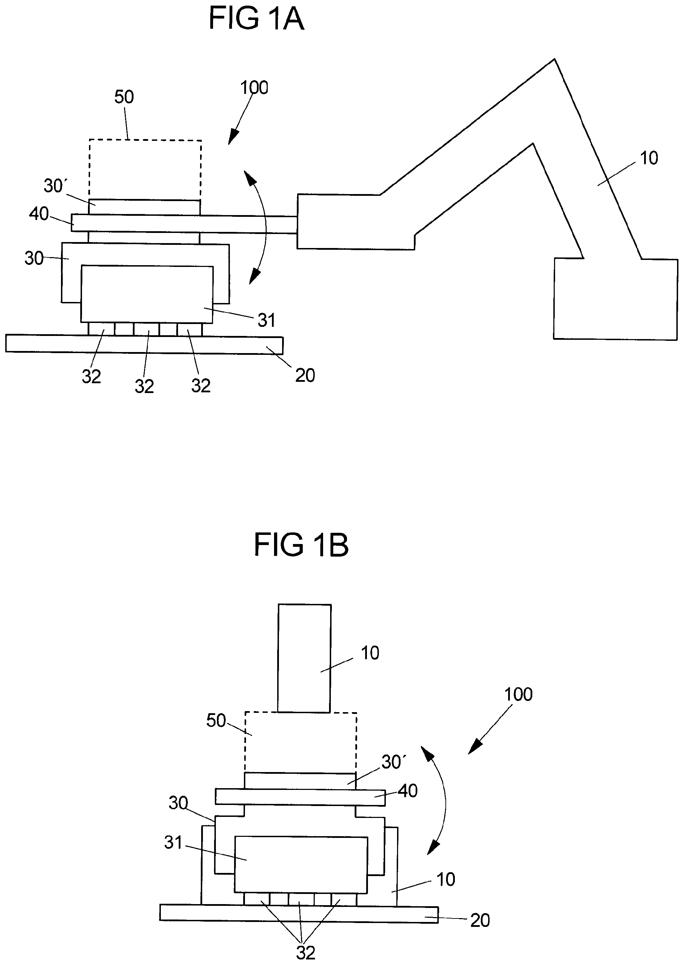

**Figur 1** zeigt schematisch eine Ausführungsform der erfindungsgemäßen Vorrichtung 100 in Seitenansicht (Fig. 1A) und in Vorderansicht (Figur 1B), umfassend einen Rahmen 40 und einen Werkstückhalter 30 mit einem zu schleifenden oder zu polieren Werkstück 32 oder mehreren Werkstücken 32 auf einem Werkzeugträger bzw. Tragkörper 31 und ein Schleif- und/oder Polierwerkzeug 20. Der Werkstückhalter 30 bildet mit dem Rahmen 40 ein Loslager, d.h. der Werkstückhalter 30 weist ein oberes Teil 30' auf, das in dem Rahmen 40 angeordnet ist. Der obere Teil 30' des Werkstückhalters ist nicht fest mit dem Rahmen 40 verbunden, sondern ragt in die Öffnung des Rahmens 40 hinein und ist in der Öffnung des Rahmens 40 beweglich angeordnet. Der Rahmen 40 ist mit einem Mittel 10 zum Bewegen des Rahmens 40 verbunden. Über den oberen Teil 30' des Werkstückhalters 30 werden die Bewegungen des Rahmens 40 auf den Werkstückhalter 30, den damit verbundenen Tragkörper 31 und die Werkstücke 32 übertragen. Das Mittel 10 zum Bewegen des Werkstückhalters 30 ist in der hier gezeigten Ausführungsform der Arm eines Roboters. Anstelle eines Roboters könnte aber auch eine CNC-Maschine oder eine klassische Hebelmaschine verwendet werden. Die Werkstücke 32 sind auf dem Tragkörper 31 angeordnet. Der Tragkörper 31 oder ein einzelnes Werkstück 32 kann locker, vorzugsweise aber fest im Werkstückhalter 30 angeordnet sein. Zur Ausübung des nötigen Drucks auf die Werkstücke 32 beim Schleif- und/oder Poliervorgang kann die Vorrichtung 100 optional ein Gewicht 50 enthalten, das so auf dem oberen Teil 30' des Werkstückhalters angebracht ist, dass Berührungen mit dem Rahmen 40 vermieden werden. Durch diese Ausgestaltung der Vorrichtung 100 werden in vorteilhafter Weise unerwünschte Verdrehungen (angedeutet durch den gebogenen Doppelpfeil) des Werkstückhalters 30 mit Tragkörper 31 und Werkstücken 32 aus der horizontalen Ebene heraus (d. h. das Verkanten des Werkstückhalters 30) beim Schleif- und/oder Poliervorgang vermieden.

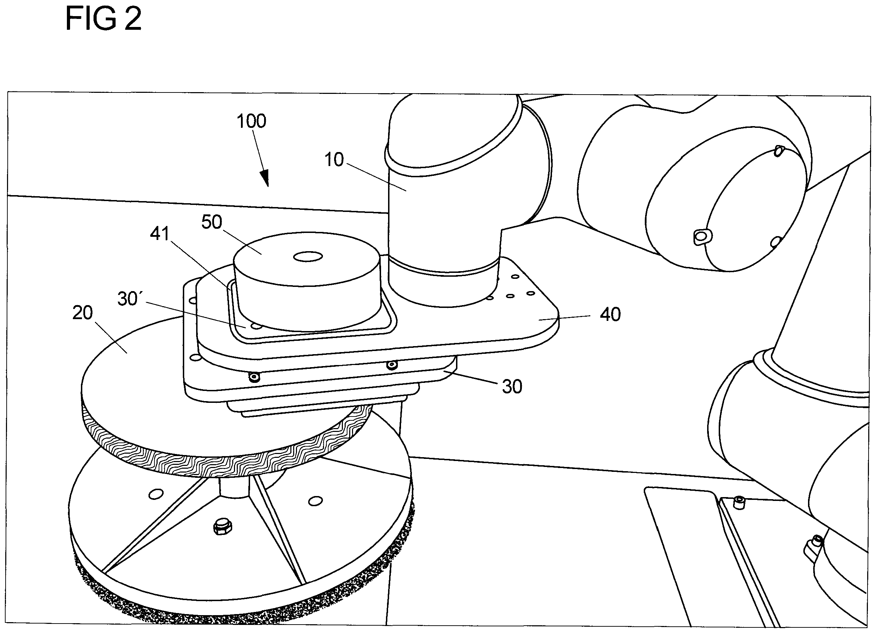

**Figur 2** zeigt eine Ausführungsform der erfindungsgemäßen Vorrichtung 100 wie in Figur 1. Das Mittel 10 zum Bewegen des Rahmens 40 ist in der hier gezeigten Ausführungsform der Arm eines Roboters. Der Rahmen 40 weist eine quadratische Öffnung auf, in der der obere Teil 30' des Werkstückhalters 30 mit mindestens einem Werkstück angeordnet ist. Der Rahmen 40 umfasst seitliche Anlagen 41 zur Führung des Werkstückhalters 30 bzw. dessen oberen Teils 30°. Der obere Teil 30' weist eine geometrische Form auf, die im Wesentlichen identisch zu der Form der Öffnung des Rahmens 40, im hier gezeigten Fall also quadratisch, ist. Der Abstand zwischen der Öffnung des Rahmens 40 und den Außenkanten des oberen Teils 30' des Werkstückhalters 30 ist minimal und gerade so groß, dass der obere Teil 30' des Werkstückhalters 30 in der Öffnung des Rahmens 40 frei beweglich ist und ein Festklemmen des oberen Teils 30`in dem Rahmen 40 vermieden wird. In der hier gezeigten Ausführungsform sind an der Öffnung des Rahmens 40 Führungen 41 für den oberen Teil 30' des Werkstückhalters 30 aus einem stoßdämpfenden Material angebracht. Der Abstand (umlaufend) zwischen der Öffnung des Rahmens 40 bzw. den dort angebrachten Führungen 41 und den Außenkanten des oberen Teils 30' des Werkstückhalters 30 beträgt im vorliegenden Fall etwa 1 mm.

Durch die quadratische Öffnung des Rahmens 40 wird gewährleistet, dass eine durch den Bewegungsvorgang erzwungene Rotation des Werkstückhalters 30 und damit der Werkstücke 42 vermieden wird. Der Roboterarm 10 ist so konfiguriert, dass der Werkstückhalter 30 mit einem oder mehreren Werkstücken horizontal in einer Ebene, die durch die aufliegenden Flächen der Werkstücke auf dem Schleif- und/oder Polierwerkzeug 20 vorbestimmt wird, geführt wird. Dabei können innerhalb dieser Ebene unterschiedliche Bewegungen in verschiedene Richtungen ausgeführt werden. Entsprechende Bewegungszyklen können in der Steuereinheit des Roboters 10 programmiert werden. Das Schleif- und/oder Polierwerkzeug 20 ist in der vorliegenden Ausführungsform als Scheibe ausgebildet. Der notwendige Druck zum Anpressen der Werkstücke an das Schleif- und/oder Polierwerkzeug 20 wird in der in Figur 1 gezeigten Ausführungsform durch ein Stahlgewicht 50 aufgebracht, das auf dem Werkstückhalter 30 angeordnet ist. Es erfolgte demnach eine gleichmäßige Beaufschlagung mit einem konstanten Druck.

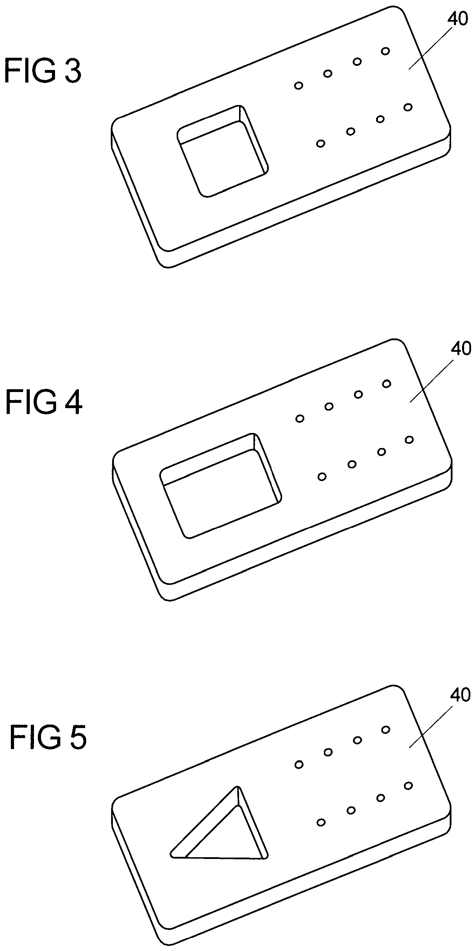

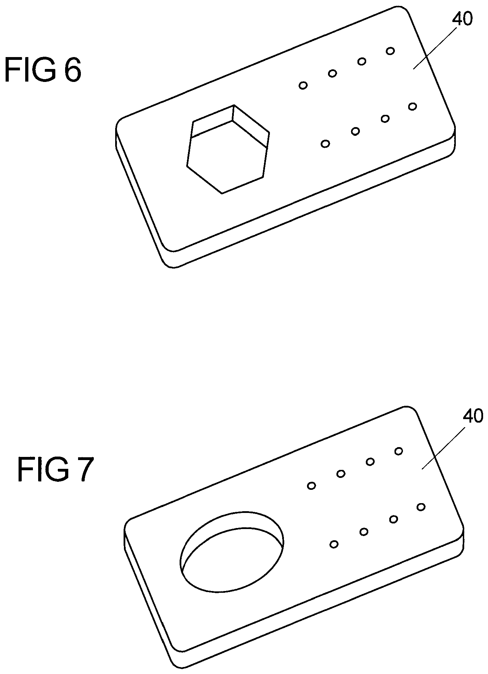

Die **Figuren 3 bis 7** zeigen Ausführungen des Rahmens 40 mit unterschiedlich ausgeführten Formen der Öffnung für die Aufnahme des Werkstückhalters 30, 30', des Werkstückträgers 31 oder eines Werkstücks 32. Grundsätzlich kann die Öffnung des Rahmens 40 eine beliebige geometrische Form aufweisen, die dazu geeignet ist, eine Verdrehung des Werkstückhalters 30 und dessen oberen Teils 30' in dem Rahmen 40 und ein Verkanten des Werkstückhalters aus der horizontalen Ebene heraus zu verhindern. Die in den Figuren 3 bis 7 gezeigten acht kleineren Löcher dienen der Befestigung des Rahmens an dem Mittel zum Bewegen 10, vorzugsweise an einem Roboterarm 10.

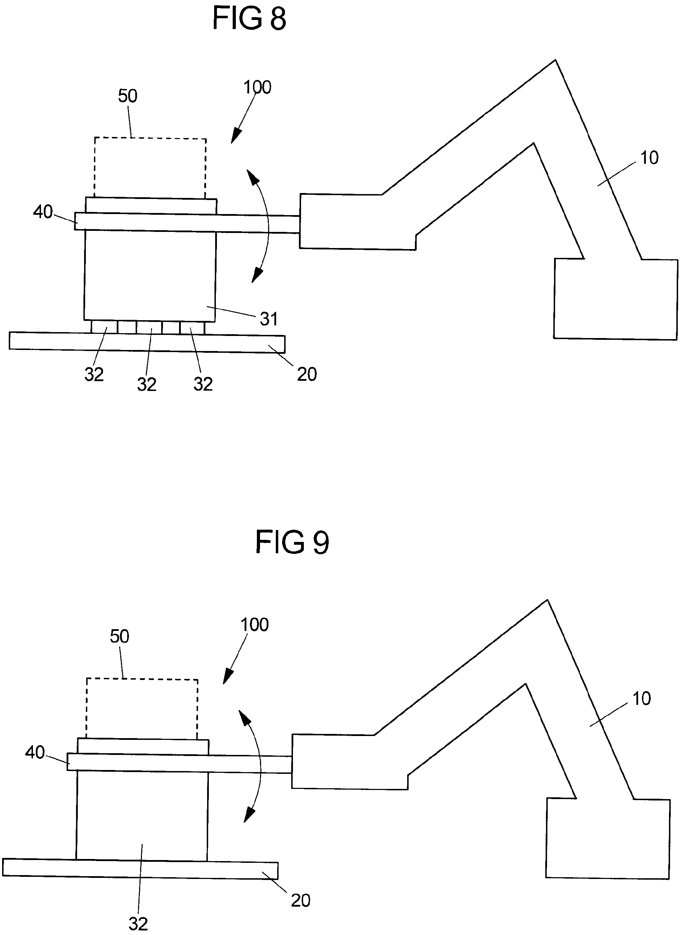

**Figur 8** zeigt eine schematische Darstellung der erfindungsgemäßen Vorrichtung 100 wie in Figur 1, jedoch in einer Ausführungsform, in der der Werkstückträger 31 mit mehreren Werkstücken (32) ohne einen zusätzlichen Werkstückhalter 30 direkt im Rahmen 40 locker enthalten ist und mit diesem zusammen bewegt wird.

**Figur 9** zeigt eine schematische Darstellung der erfindungsgemäßen Vorrichtung 100 wie in Figur 1, jedoch in einer Ausführungsform, in der ein Werkstück 32 ohne einen zusätzlichen Werkstückhalter 30 bzw. ohne einen zusätzlichen Werkstückträger 31 direkt im Rahmen 40 locker enthalten ist und mit diesem zusammen bewegt wird.

### Liste der Bezugszeichen

- 10: Mittel zum Bewegen des Werkstückhalters, Roboter mit Roboterarm
- 20: Schleif- und/oder Polierwerkzeug
- 30: Werkstückhalter
- 30': oberer Teil des Werkstückhalters
- 31: Werkstückträger, Tragkörper
- 32: Werkstück
- 40: Rahmen
- 41: seitliche Anlagen zur Führung des Werkstückhalters
- 50: Gewicht
- 100: Vorrichtung

## Patentansprüche

1. Vorrichtung (100) für das Schleifen und/oder Polieren von planen Flächen, umfassend
• ein Schleif- und/oder Polierwerkzeug (20),
• einen Rahmen (40),
• ein Werkstück (32) oder einen Halter (30) für mindestens ein Werkstück (32), und
• ein Mittel (10) zum Bewegen des Rahmens (40) mit dem Werkstück (32) oder dem Werkstückhalter (30) mit dem mindestens einen Werkstück (32)
**dadurch gekennzeichnet dass**
die Vorrichtung (100) so eingerichtet ist, dass ein Loslager zwischen dem Werkstück (32) oder dem Werkstückhalter (30) mit dem mindestens einen Werkstück (32) und dem Rahmen (40) gebildet wird indem der Rahmen das Werkstück oder den Werkstückhalter mit mindestens einem Werkstück locker enthält, und das Mittel (10) zum Bewegen des Rahmens (40) und
des Werkstücks (32) oder des Werkstückhalters (30, 30') mit dem mindestens einen Werkstück (32) so konfiguriert ist, dass das Werkstück (32) oder der Werkstückhalter (30) mit dem mindestens einen Werkstück (32) in einer Ebene, die durch die aufliegenden Flächen des mindestens einen Werkstücks (32) auf dem Schleif- und/oder Polierwerkzeug (20) vorbestimmt wird, geführt wird; dass das Loslager dadurch gebildet wird, dass der Rahmen (40) eine Öffnung aufweist, in der das Werkstück (32) oder ein oberer Teil (30') des Werkstückhalters (30) angeordnet ist, dass das Werkstück (32) oder der obere Teil (30') des Werkstückhalters (30) in der Öffnung des Rahmens (40) beweglich angeordnet ist und das Werkstück (32) oder der obere Teil (30') des Werkstückhalters (30) nicht fest mit dem Rahmen (40) verbunden ist;
dass das Mittel (10) zum Bewegen des Rahmens (40) ausgewählt ist aus einem Roboter mit einem Roboterarm, einer CNC-Maschine und einer anderen Vorrichtung mit automatisierten Achsen; und
dass das Polierwerkzeug feststehend angeordnet ist.

2. Vorrichtung (100) nach Anspruch 1, **dadurch gekennzeichnet, dass** das Mittel (10) zum Bewegen des Rahmens (40) so konfiguriert ist, dass keine vertikale Ausübung von Druck auf das Werkstück (32) erfolgen kann.

3. Vorrichtung (100) nach einem der vorherigen Ansprüche, **dadurch gekennzeichnet, dass** der Rahmen (40) seitliche Anlagen (41) zur Führung des Werkstücks (32) oder des Werkstückhalters (30', 30) aufweist.

4. Vorrichtung (100) nach einem der vorherigen Ansprüche, wobei der Rahmen (40) und ein obere Teil (30') des Werkstückhalters (30) so konfiguriert sind, dass eine bei dem Schleif- und/oder Poliervorgang erzwungene Rotation des Werkstückhalters (30) mit dem mindestens einen Werkstück (32) in dem Rahmen (40) verhindert wird, **dadurch gekennzeichnet, dass** die Öffnung des Rahmens (40) und der obere Teil (30') des Werkstückhalters (30) eine im Wesentlichen identische geometrische Form aufweisen.

5. Vorrichtung (100) nach Anspruch 4, **dadurch gekennzeichnet, dass** die Öffnung des Rahmens (40) eine rechteckige, trapezförmige, vieleckige oder elliptische oder beliebige andere Form aufweist, die eine Verdrehung des Werkstückhalters (30, 30') in der Öffnung des Rahmens verhindert.

6. Vorrichtung (100) nach Anspruch 4 oder 5, **dadurch gekennzeichnet, dass** der Abstand zwischen der Öffnung des Rahmens (40) und den Außenkanten des Teils des oberen Teils (30') des Werkstückhalters (30), minimal und gerade groß genug gestaltet ist, dass ein Festklemmen des Werkstückhalters (30', 30) in dem Rahmen vermieden wird.

7. Vorrichtung (100) nach einem der vorhergehenden Ansprüche, **dadurch gekennzeichnet, dass** der Werkstückhalter (30) mehrere Werkstücke (32) enthält, die in einem Tragkörper (31) angeordnet sind.

8. Vorrichtung (100) nach einem der vorhergehenden Ansprüche, **dadurch gekennzeichnet, dass** das Schleif- und oder Polierwerkzeug (20) eine Schleif- und/oder Polierscheibe ist.

9. Verfahren für das Polieren von planen Flächen unter Verwendung einer Vorrichtung (100) nach einem der vorherigen Ansprüche, wobei das Verfahren die Schritte umfasst:
• Einbringen eines Werkstücks (32) oder eines Werkstückhalters (30) mit mindestens einem Werkstück (32) oder Tragkörper (31) in einen Rahmen (40), der mit einem Mittel (10) zum Bewegen des Rahmens (40) verbunden ist, der wahlweise seitliche Anlagen (41) zur Führung des Werkstückhalters aufweist;
• Bewegen des Rahmens (40) mit dem Werkstück (32) oder dem Werkstückhalter (30), der mindestens ein Werkstück (32) oder einen Tragkörper (31) mit mehreren Werkstücken (32) enthält, mit dem Mittel (10) zum Bewegen des Rahmens (40) in einer Ebene, die durch die aufliegenden Flächen des mindesten einen Werkstücks (32) auf einem Schleif- und/oder Polierwerkzeug (20) vorbestimmt wird; und
• Herstellen einer geschliffenen und/oder polierten planen Fläche des Werkstücks (32);
wobei das Werkstück (32) oder der Werkstückhalter (30) mit dem Rahmen (40) ein Loslager bildet, wobei das Werkstück (32) oder der Werkstückhalter (30, 30') beweglich in der Öffnung des Rahmens (40) verbunden ist und Verdrehungen des Werkstücks (32) oder des des Werkstückhalters (30) mit dem mindestens einen Werkstück (32), insbesondere aus der horizontalen Auflageebene der Werkstücke (32) heraus, vermieden werden.

10. Verfahren nach Anspruch 9, **dadurch gekennzeichnet, dass** der zur Ausführung des Schleif- und/oder Poliervorgangs benötigte Druck durch das Gewicht des Werkstücks (32) selbst, direkt durch den Werkstückhalter (30) und gegebenenfalls durch den Tragkörper (31), und optional, ein auf dem Werkstück (32) und/oder Werkstückhalter (30) aufgebrachtes Gewicht (50) ausgeübt wird.

11. Verfahren nach Anspruch 9 oder 10, **dadurch gekennzeichnet, dass** über den Rahmen (40) die Bewegung des Werkstücks (32) oder des Werkstückhalters (30) mit dem mindestens einen Werkstück (32) in genau vordefinierten Bahnen ausgeführt wird.

## Claims

1. Device (100) for the grinding and/or polishing of planar surfaces, comprising
• a grinding and/or polishing tool (20),
• a frame (40),
• a workpiece (32) or a holder (30) for at least one workpiece (32), and
• a means (10) for moving the frame (40) with the workpiece (32) or the workpiece holder (30) with the at least one workpiece (32),
**characterized in that**
the device (100) is set up in such a way that a loose bearing is formed between the workpiece (32) or the workpiece holder (30) with the at least one workpiece (32) and the frame (40) by the frame loosely containing the workpiece or the workpiece holder with at least one workpiece, and the means (10) for moving the frame (40) and the workpiece (32) or the workpiece holder (30, 30') with the at least one workpiece (32) is configured in such a way that the workpiece (32) or the workpiece holder (30) with the at least one workpiece (32) is guided in a plane which is predetermined by the surfaces of the at least one workpiece (32) resting on the grinding and/or polishing tool (20); **in that** the loose bearing is formed by the frame (40) having an opening in which the workpiece (32) or an upper part (30') of the workpiece holder (30) is arranged, **in that** the workpiece (32) or the upper part (30') of the workpiece holder (30) is movably arranged in the opening of the frame (40) and the workpiece (32) or the upper part (30') of the workpiece holder (30) is not fixedly connected to the frame (40);
**in that** the means (10) for moving the frame (40) is selected from a robot with a robot arm, a CNC machine and some other device with automated axes; and
**in that** the polishing tool is arranged as stationary.

2. Device (100) according to Claim 1, **characterized in that** the means (10) for moving the frame (40) is configured in such a way that no vertical exertion of pressure on the workpiece (32) can take place.

3. Device (100) according to one of the preceding claims, **characterized in that** the frame (40) has lateral abutments (41) for guiding the workpiece (32) or the workpiece holder (30', 30) .

4. Device (100) according to one of the preceding claims, the frame (40) and the upper part (30') of the workpiece holder (30) being configured in such a way that rotation of the workpiece holder (30) with the at least one workpiece (32) in the frame (40) that is enforced in the grinding and/or polishing operation is prevented, **characterized in that** the opening of the frame (40) and the upper part (30') of the workpiece holder (30) have a substantially identical geometrical form.

5. Device (100) according to Claim 4, **characterized in that** the opening of the frame (40) has a rectangular, trapezoidal, polygonal or elliptical or any other form that prevents twisting of the workpiece holder (30, 30') in the opening of the frame.

6. Device (100) according to Claim 4 or 5, **characterized in that** the distance between the opening of the frame (40) and the outer edges of the part of the upper part (30') of the workpiece holder (30) is minimal and made just large enough that jamming of the workpiece holder (30', 30) in the frame is avoided.

7. Device (100) according to one of the preceding claims, **characterized in that** the workpiece holder (30) contains a number of workpieces (32), which are arranged in a carrying body (31).

8. Device (100) according to one of the preceding claims, **characterized in that** the grinding and/or polishing tool (20) is a grinding and/or polishing wheel.

9. Method for the polishing of planar surfaces by using a device (100) according to one of the preceding claims, the method comprising the steps of:
• introducing a workpiece (32) or a workpiece holder (30) with at least one workpiece (32) or a carrying body (31) into a frame (40), which is connected to means (10) for moving the frame (40), which optionally has lateral abutments (41) for guiding the workpiece holder;
• moving the frame (40) with the workpiece (32) or the workpiece holder (30), which contains at least one workpiece (32) or a carrying body (31) with a number of workpieces (32), by the means (10) for moving the frame (40) in one plane, which is predetermined by the surfaces of the at least one workpiece (32) resting on a grinding and/or polishing tool (20); and
• producing a ground and/or polished planar surface of the workpiece (32);
the workpiece (32) or the workpiece holder (30) forming a loose bearing with the frame (40), the workpiece (32) or the workpiece holder (30, 30') being movably connected in the opening of the frame (40) and twists of the workpiece (32) or of the workpiece holder (30) with the at least one workpiece (32), in particular out of the horizontal resting plane of the workpieces (32), being avoided.

10. Method according to Claim 9, **characterized in that** the pressure required for performing the grinding and/or polishing operation is exerted by the weight of the workpiece (32) itself, directly by the workpiece holder (30) and if applicable by the carrying body (31), and optionally a weight (50) applied to the workpiece (32) and/or the workpiece holder (30).

11. Method according to Claim 9 or 10, **characterized in that** the movement of the workpiece (32) or the workpiece holder (30) with the at least one workpiece (32) is performed in precisely predefined paths by way of the frame (40).

## Revendications

1. Dispositif (100) pour le ponçage et/ou le polissage de surfaces planes, comprenant
• un outil de ponçage et/ou de polissage (20),
• un cadre (40),
• une pièce (32) ou un support (30) pour au moins une pièce (32), et
• un moyen (10) pour déplacer le cadre (40) avec la pièce (32) ou le support de pièce (30) avec l'au moins une pièce (32), **caractérisé en ce que**
le dispositif (100) est adapté de telle sorte qu'un palier libre est formé entre la pièce (32) ou le support de pièce (30) avec l'au moins une pièce (32) et le cadre (40) par le fait que le cadre contient de manière lâche la pièce ou le support de pièce avec au moins une pièce, et le moyen (10) pour déplacer le cadre (40) et la pièce (32) ou le support de pièce (30, 30') avec l'au moins une pièce (32) est configuré de telle sorte que la pièce (32) ou le support de pièce (30) avec l'au moins une pièce (32) est guidé(e) dans un plan qui est prédéterminé par les surfaces d'appui de l'au moins une pièce (32) sur l'outil de ponçage et/ou de polissage (20) ; **en ce que** le palier libre est formé par le fait que le cadre (40) présente une ouverture dans laquelle est agencée la pièce (32) ou une partie supérieure (30') du support de pièce (30), **en ce que** la pièce (32) ou la partie supérieure (30') du support de pièce (30) est agencée de manière mobile dans l'ouverture du cadre (40) et la pièce (32) ou la partie supérieure (30') du support de pièce (30) n'est pas reliée de manière fixe au cadre (40) ;
**en ce que** le moyen (10) pour déplacer le cadre (40) est choisi parmi un robot avec un bras de robot, une machine CNC et un autre dispositif avec des axes automatisés ; et
**en ce que** l'outil de polissage est agencé de manière fixe.

2. Dispositif (100) selon la revendication 1, **caractérisé en ce que** le moyen (10) pour déplacer le cadre (40) est configuré de manière à ce qu'aucune pression verticale ne puisse être exercée sur la pièce (32).

3. Dispositif (100) selon l'une quelconque des revendications précédentes, **caractérisé en ce que** le cadre (40) présente des appuis latéraux (41) pour guider la pièce (32) ou le support de pièce (30', 30).

4. Dispositif (100) selon l'une quelconque des revendications précédentes, le cadre (40) et une partie supérieure (30') du support de pièce (30) étant configurés de manière à empêcher une rotation forcée du support de pièce (30) avec l'au moins une pièce (32) dans le cadre (40) lors de l'opération de ponçage et/ou de polissage, **caractérisé en ce que** l'ouverture du cadre (40) et la partie supérieure (30') du support de pièce (30) présentent une forme géométrique essentiellement identique.

5. Dispositif (100) selon la revendication 4, **caractérisé en ce que** l'ouverture du cadre (40) présente une forme rectangulaire, trapézoïdale, polygonale ou elliptique ou toute autre forme qui empêche la rotation du support de pièce (30, 30') dans l'ouverture du cadre.

6. Dispositif (100) selon la revendication 4 ou 5, **caractérisé en ce que** la distance entre l'ouverture du cadre (40) et les bords extérieurs de la partie de la partie supérieure (30') du support de pièce (30) est conçue pour être minimale et juste suffisamment grande pour éviter un blocage du support de pièce (30', 30) dans le cadre.

7. Dispositif (100) selon l'une quelconque des revendications précédentes, **caractérisé en ce que** le support de pièce (30) contient plusieurs pièces (32) agencées dans un corps porteur (31) .

8. Dispositif (100) selon l'une quelconque des revendications précédentes, **caractérisé en ce que** l'outil de ponçage et/ou de polissage (20) est un disque de ponçage et/ou de polissage.

9. Procédé de polissage de surfaces planes en utilisant un dispositif (100) selon l'une quelconque des revendications précédentes, le procédé comprenant les étapes suivantes :
• la mise en place d'une pièce (32) ou d'un support de pièce (30) avec au moins une pièce (32) ou un corps porteur (31) dans un cadre (40) qui est relié à un moyen (10) pour déplacer le cadre (40), qui présente au choix des appuis latéraux (41) pour guider le support de pièce ;
• le déplacement du cadre (40) avec la pièce (32) ou le support de pièce (30) contenant au moins une pièce (32) ou un corps porteur (31) avec plusieurs pièces (32), avec le moyen (10) pour déplacer le cadre (40) dans un plan prédéterminé par les surfaces d'appui de l'au moins une pièce (32) sur un outil de ponçage et/ou de polissage (20) ; et
• la production d'une surface plane poncée et/ou polie de la pièce (32) ;
la pièce (32) ou le support de pièce (30) formant un palier libre avec le cadre (40), la pièce (32) ou le support de pièce (30, 30') étant relié(e) de manière mobile dans l'ouverture du cadre (40) et les rotations de la pièce (32) ou du support de pièce (30) avec l'au moins une pièce (32), notamment hors du plan d'appui horizontal des pièces (32), étant évitées.

10. Procédé selon la revendication 9, **caractérisé en ce que** la pression nécessaire pour effectuer l'opération de ponçage et/ou de polissage est exercée par le poids de la pièce (32) elle-même, directement par le support de pièce (30) et éventuellement par le corps porteur (31), et en option, un poids (50) appliqué sur la pièce (32) et/ou le support de pièce (30).

11. Procédé selon la revendication 9 ou 10, **caractérisé en ce que**, par l'intermédiaire du cadre (40), le déplacement de la pièce (32) ou du support de pièce (30) avec l'au moins une pièce (32) est effectué selon des trajectoires prédéfinies avec précision.
